# DEMANDE DE BREVET EUROPEEN

(11) **EP 1 454 791 A2**
(43) Date de publication de la demande: **08.09.2004**
(21) Numéro de dépôt: 04350003.2
(22) Date de dépôt: 16.02.2004
(51) Int. Cl.: B60P 1/00, B60S 13/00

(54) **Un équipement adapté pour la préhension des véhicules dont la couduite relève du permis B.**

(30) Priorité: 04.03.2003 FR 0302599
(71) Demandeur: Moreau, Jean-Yves, 44000 Nantes (FR)
(72) Inventeur: Moreau, Jean-Yves, 44000 Nantes (FR)

(57) **Abrégé**

Dispositif pour déplacer tout véhicule en panne ou en infraction dont la conduite relève du permis B.

L'invention concerne une structure constituée d'éléments rigides de longueurs variables : une poutre P supportée par la flèche d'un engin de levage par l'intermédiaire d'un axe rotatif, des barres extensibles fixées en leur milieu aux extrémités de la poutre P, des tubes T fixés dans le plan perpendiculaire aux extrémités des extensions B' de B, des platines rotatives à l'horizontal fixées à l'extrémité des tubes T et pouvant être garnies de structures gonflables additionnelles indispensables pour certains véhicules.

L'ajustement des longueurs des éléments permet l'adaptation de cette structure de préhension à tout type de véhicule.

Cette structure permet l'enlèvement de véhicules accidentés, en panne ou en infraction quel que soit le type du véhicule et la situation de celui-ci.

## Description

La présente invention concerne un équipement adapté pour la préhension des véhicules dont la conduite relève du permis B.

Aujourd'hui, l'enlèvement de véhicule en panne ou en infraction se fait de trois façons différentes :
- par plateau : le plateau d'un camion porteur est positionné devant le véhicule à traiter, et le véhicule est hissé sur le plateau au moyen d'un tire fort.
- par soulèvement à l'aide de sangles passées sous le véhicule et accrochées à un palonnier standard.
- par remorquage : les roues d'un essieu sont soulevées par une fourche les emprisonnant et, suivant les cas, des roulettes amovibles sont positionnées sous les roues du second essieu.

Aucun de ces moyens ne peut traiter cent pour cent des cas :
- absence de place pour la manoeuvre du véhicule à traiter
- bas de caisse en plastique ou présence de marche pied
- roues braquées, suspension hydraulique en position basse, boîte automatique enclenchée.

L'invention résout tous les cas de figure.

Le dispositif selon l'invention consiste en une armature rigide, articulée, variable dans ses proportions pour envelopper le véhicule à traiter, des platines mobiles verrouillent la cage ainsi constituée sur le véhicule à déplacer, des structures additionnelles gonflables protègent le véhicule des platines rigides et répartissent la charge que représente le véhicule

L'équipement est constitué d'une poutre P de longueur variable, cette poutre est fixée à la flèche d'une grue par un point d'ancrage rotatif coulissant sur une partie de la longueur de la poutre P.

A chaque extrémité de cette poutre P est fixée, par son milieu une barre B, à chaque extrémité de laquelle coulisse une barre B'. La longueur maximale de ces barres correspond à la largeur maximale nécessaire pour les véhicules à traiter.

A chaque extrémité de ces barres B sont fixés des tubes T de longueur variable. Ces tubes sont orientables dans le plan perpendiculaire aux barres B. La longueur maximale de ces tubes correspond à la hauteur maximale nécessaire pour les véhicules à traiter.

A l'extrémité de chaque tube est fixée une platine orientable dans le plan horizontal lorsque les tubes sont dans le plan vertical. Ces platines positionnées sous le véhicule ont pour but de supporter la charge de celui-ci lors du levage.

Les structures additionnelles gonflables solidarisées aux platines, par leur forme et leur pression, évitent la dégradation du véhicule et, en équilibrant les points de pression de la charge autorisent l'enlèvement de véhicules très différents.

L'indépendance des réglages des différentes pièces : poutre, barres, tubes et platines permet la saisie de véhicule classique, de tout-terrain, voir de side car.

Les dimensions variables des éléments de l'invention permettent d'avoir une structure de base pouvant être pilotée dans un espace restreint.

Des roues type jockey amovibles fixables à l'extrémité des tubes, autorisent dans les cas extrêmes le déplacement de la charge par roulement, en utilisant la rotation du pointd'ancrage et la traction de la flèche de la grue. Dans ce cas de déplacement par roulement, la charge est solidarisée avec la platine par l'effet des structures gonflables.

## Revendications

1. Dispositif pour la préhension de véhicule **caractérisé en ce que** l'armature réglable dans les trois dimensions couvre le véhicule à déplacer, des platines mobiles déployées sous la charge permettent de le soulever, des structures gonflables prenant appui sur les platines et augmentant les surfaces en contact avec le véhicule protègent celui-ci.

2. Dispositif selon la revendication (1) **caractérisé en ce que** les composants poutre P, l'ensemble barre BB' et les tubes T sont de longueur variable.

3. Dispositif selon la revendication (1) **caractérisé en ce que** les platines sont le support de la charge.

4. Dispositif selon la revendication 1) **caractérisé en ce que** les platines peuvent avoir une surface importante par l'adjonction de surfaces gonflables dont le but est de protéger les dessous de véhicule et de répartir la pression des charges à soulever.

5. Dispositif selon la revendication (1) **caractérisé en ce que** les éléments B' peuvent avoir une longueur de fonctionnement différente les uns des autres.

6. Dispositif selon la revendication (1) **caractérisé en ce que** chaque tube T peut avoir sa propre longueur et sa propre orientation dans le plan perpendiculaire à B.
